# EUROPEAN PATENT APPLICATION

(11) **EP 4 425 907 A1**
(43) Date of publication of application: **04.09.2024**
(21) Application number: 22894477.3
(22) Date of filing: 28.09.2022
(51) Int. Cl.: H04N 5/06, H04N 5/067

(54) **IMAGE PROCESSING METHOD AND APPARATUS AND STORAGE MEDIUM**

(30) Priority: 22.11.2021 CN 202111389119
(71) Applicant: Zeku Technology (Shanghai) Corp., Ltd., Shanghai 200120 (CN)
(72) Inventor: CUI, Huiting, Shanghai 200120 (CN)
(74) Representative: Penza, Giancarlo
(86) International application number: PCT/CN2022/122219
(87) International publication number: WO 2023/087939

(57) **Abstract**

Disclosed in embodiments of the present application are an image processing method and apparatus and a storage medium. The image processing apparatus comprises a first processing module and a second processing module. The method comprises: by means of the first processing module, packaging each set of image data in at least one set of image data to obtain at least one image data packet, and transmitting the at least one image data packet to the second processing module, each set of image data being multiple frames of original images having different exposure time periods acquired at one moment; selecting a target data packet from the at least one image data packet by means of the second processing module; and by means of the second processing module, parsing one set of image data comprised in the target data packet, and fusing the parsed set of image data to generate a high dynamic range image.

## Description

### CROSS-REFERENCE TO RELATED APPLICATION(S)

This application is based upon and claims priority to Chinese Patent Application No. 202111389119.9 filed on November 22, 2021 and entitled "IMAGE PROCESSING METHOD AND APPARATUS AND STORAGE MEDIUM", the disclosure of which is hereby incorporated by reference in its entirety.

### TECHNICAL FIELD

Embodiments of the disclosure relate to the technical field of picture processing, and in particular, to a picture processing method and apparatus, and a storage medium.

### BACKGROUND

At present, a zero-delay photographing scheme with a high dynamic range includes following operations: the picture sensor outputs three frames of original pictures of long exposure, medium exposure, and short exposure to an application processor at different moments, respectively; and after the three frames of original pictures are received, the application processor places the three frames of original pictures into corresponding cache queues, respectively. When a use triggers a photographing button, three frames of original pictures at a certain previous moment are selected for fusion, and a photographed picture is finally generated and provided to the user. However, the efficiency of picture transmission is relatively low.

### SUMMARY

Embodiments of the application provide a picture processing method and apparatus, and a storage medium to reduce transmission channels occupied by picture transmission, and improve the efficiency of picture transmission.

The technical solutions of the embodiments of the disclosure are implemented as follows.

An embodiment of the application provides a picture processing method, which is applied to a picture processing apparatus. The picture processing apparatus includes a first processing module and a second processing module. The method includes the following operations.

Each set of picture data in at least one set of picture data is packaged by a first processing module to obtain at least one picture data packet, and the at least one picture data packet is transmitted to a second processing module by the first processing module. Each set of picture information includes a plurality of frames of original pictures captured at same moment with different exposure durations.

A target data packet is selected from the at least one picture data packet by the second processing module.

A set of picture data included in the target data packet is parsed by the second processing module, and the parsed set of picture data is fused to generate a high dynamic range picture.

An embodiment of the application provides a picture processing method, which is applied to a first processing module. The method includes the following operations.

Each set of picture data in at least one set of picture data is packaged to obtain at least one picture data packet. Each set of picture data includes a plurality of frames of original pictures captured at same moment with different exposure durations.

The at least one picture data packet is transmitted to a second processing module.

An embodiment of the application provides a picture processing method, which is applied to a second processing module. The method includes the following operations.

At least one picture data packet transmitted by a first processing module is received, and a target data packet is selected from the at least one picture data packet. Each picture data packet is obtained by packaging a set of picture data, and each set of picture data includes a plurality of frames of original pictures captured at same moment with different exposure durations.

A set of picture data included in the target data packet is parsed, and the parsed set of picture data is fused to generate a high dynamic range picture.

An embodiment of the application provides a picture processing apparatus, which includes a first processing module and a second processing module.

The first processing module is configured to package each set of picture data in at least one set of picture data by a first processing module to obtain at least one picture data packet, and transmit the at least one picture data packet to a second processing module by the first processing module. Each set of picture data includes a plurality of frames of original pictures captured at same moment with different exposure durations.

The second processing module is configured to select a target data packet from the at least one picture data packet; and parse a set of picture data included in the target data packet, and fuse the parsed set of picture data to generate a high dynamic range picture.

An embodiment of the disclosure provides a first processing module, which includes a packaging module and a transmission module.

The packaging module is configured to package each set of picture data in at least one set of picture data to obtain at least one picture data packet. Each set of picture data includes a plurality of frames of original pictures captured at same moment with different exposure durations.

The transmission module is configured to transmit the at least one picture data packet to a second processing module.

An embodiment of the disclosure provides a second processing module, which includes a receiving module, a selection module, and a generation module.

The receiving module is configured to receive at least one picture data packet transmitted by a first processing module.

The selection module is configured to select a target data packet from the at least one picture data packet. Each picture data packet is obtained by packaging a set of picture data, and each set of picture data includes a plurality of frames of original pictures captured at same moment with different exposure durations.

The generation module is configured to parse a set of picture data included in the target data packet, and fuse the parsed set of picture data to generate a high dynamic range picture.

An embodiment of the application provides a computer-readable storage medium. The computer-readable storage medium stores a computer program. The above-mentioned method for picture processing is implemented when the computer program is executed by a processor.

### BRIEF DESCRIPTION OF THE DRAWINGS

FIG. 1 is a first schematic structural diagram of a picture processing apparatus according to an embodiment of the disclosure.
FIG. 2 is a first schematic flowchart of a picture processing method according to an embodiment of the disclosure.
FIG. 3 is a first schematic diagram of exemplary packaging according to an embodiment of the disclosure.
FIG. 4 is a second schematic diagram of exemplary packaging according to an embodiment of the disclosure.
FIG. 5 is a third schematic diagram of exemplary packaging according to an embodiment of the disclosure.
FIG. 6 is a schematic diagram of an exemplary process for the picture data packet according to an embodiment of the disclosure.
FIG. 7 is a schematic flowchart of exemplary data packet transmission and parsing according to an embodiment of the disclosure.
FIG. 8 is a second schematic flowchart of a picture processing method according to an embodiment of the disclosure.
FIG. 9 is a third schematic flowchart of a picture processing method according to an embodiment of the disclosure.
FIG. 10 is a second schematic structural diagram of a picture processing apparatus according to an embodiment of the disclosure.
FIG. 11 is a schematic structural diagram of a first processing module according to an embodiment of the disclosure.
FIG. 12 is a schematic structural diagram of a second processing module according to an embodiment of the disclosure.

### DETAILED DESCRIPTION

According to a first aspect, an embodiment of the disclosure provides a method for picture processing, which is applied to an apparatus for picture processing. The apparatus for picture processing includes a first processing module and a second processing module. The method includes the following operations.

The first processing module packages each set of picture data in at least one set of picture data to obtain at least one picture data packet, and transmits the at least one picture data packet to the second processing module. Each set of picture information includes a plurality of frames of original pictures captured at a same moment with different exposure durations.

The second processing module selects a target data packet from the at least one picture data packet.

The second processing module parses a set of picture data included in the target data packet, and fuses the parsed set of picture data to generate a high dynamic range picture.

In the above method, the operation of selecting the target data packet from the at least one picture data packet by the second processing module includes the following operations.

When a photographing time stamp generated based on a photographing instruction is acquired, the second processing module searches, from the at least one picture data packet, for a picture data packet that a preset condition is met between a generation time stamp of the set of picture data included in the picture data packet and the photographing time stamp.

The second processing module determines the searched picture data packet as the target data packet.

In the above method, the operation that the second processing module searches for the picture data packet that the preset condition is met between the generation time stamp of the set of picture data included in the picture data packet and the photographing time stamp includes the following operations.

The second processing module acquires at least one set of metadata corresponding to the at least one set of picture data one-to-one. Each set of metadata includes a picture frame number and the generation time stamp corresponding to a set of picture data.

The second processing module searches for a set of metadata that the preset condition is met between the generation time stamp included in the set of metadata and the photographing time stamp from the at least one set of metadata.

The second processing module determines the picture frame number included in the searched set of metadata as a target frame number, and searches for the picture data packet associated with the target frame number from the at least one picture data packet.

In the above method, before the at least one set of metadata corresponding to the at least one set of picture data one-to-one is acquired by the second processing module, the method further includes the following operation.

The first processing module packages, in each of the at least one picture data packet, the set of metadata corresponding to the set of picture data one-to-one included in the respective picture data packet.

Accordingly, the operation that the second processing module acquires the at least one set of metadata corresponding to the at least one set of picture data one-to-one includes the following operation.

The second processing module parses from the at least one picture data packet to obtain at least one set of metadata.

In the above method, before the at least one set of metadata corresponding to the at least one set of picture data one-to-one is acquired by the second processing module, the method further includes the following operation.

The first processing module packages each set of metadata in the at least one set of metadata to obtain at least one metadata packet, and transmits the at least one metadata packet to the second processing module.

Accordingly, the operation that the second processing module acquires the at least one set of metadata corresponding to the at least one set of picture data one-to-one includes the following operation.

The at least one set of metadata is obtained by parsing from the at least one metadata packet.

In the above method, before the at least one set of metadata corresponding to the at least one set of picture data one-to-one is acquired by the second processing module, the method further includes the following operations.

The first processing module packages partial data in each set of metadata in the at least one set of metadata to obtain at least one partial data packet, and packages in each of the at least one picture data packet, data, which is not packaged to the partial data packet, in the set of metadata corresponding to the set of picture data included in the respective picture data packet.

The first processing module transmits at least one partial data packet to the second processing module.

Accordingly, the operation that the second processing module acquires the at least one set of metadata corresponding to the at least one set of picture data one-to-one includes the following operation.

The second processing module parses from the at least one partial data packet and the at least one picture data packet to obtain the at least one set of metadata.

In the above method, the operation that the second processing module parses the set of picture data included in the target data packet includes the following operations.

The second processing module acquires the set of metadata corresponding to the set of picture data included in the target data packet, and acquires parsing type information from the acquired set of metadata acquired.

The second processing module determines a picture parsing manner according to the parsing type information by the second processing module, and parses the set of picture data included in the target data packet according to the picture parsing manner.

According to a second aspect, an embodiment of the disclosure provides a picture processing method, which is applied to a first processing module. The method includes the following operations.

Each set of picture data in at least one set of picture data is packaged to obtain at least one picture data packet. Each set of picture data includes a plurality of frames of original pictures captured at same moment with different exposure durations.

The at least one picture data packet is transmitted to a second processing module.

The above method further includes the following operations.

In each of the at least one picture data packet, a set of metadata corresponding to a set of picture data included in the respective picture data packet is packaged.

Alternatively, the set of metadata corresponding to each set of picture data in the at least one set of picture data is packaged to obtain at least one metadata packet, and the at least one metadata packet is transmitted to the second processing module.

Alternatively, partial data in the set of metadata corresponding to each set of picture data in the at least one set of picture data is packaged to obtain at least one partial data packet, and in each of the at least one picture data packet, the data, which is not packaged to the partial data packet, in the set of metadata corresponding to the set of picture data included in the respective picture data packet is packaged.

According to a third aspect, an embodiment of the disclosure provides a picture processing method, which is applied to a second processing module. The method includes the following operations.

At least one picture data packet transmitted by a first processing module is received, and a target data packet is selected from the at least one picture data packet. Each picture data packet is obtained by packaging a set of picture data, and each set of picture data includes a plurality of frames of original pictures captured at same moment with different exposure durations.

A set of picture data included in the target data packet is parsed, and the parsed set of picture data is fused to generate a high dynamic range picture.

In the above method, the operation of selecting the target data packet from the at least one picture data packet includes the following operations.

When a photographing time stamp generated based on a photographing instruction is acquired, a picture data packet that a preset condition is met between a generation time stamp of the set of picture data included in the picture data packet and the photographing time stamp is searched from the at least one picture data packet.

The searched picture data packet is determined as the target data packet.

In the above method, the operation of searching for the picture data packet that the preset condition is met between the generation time stamp of the set of picture data included in the picture data packet and the photographing time stamp includes the following operations.

At least one set of metadata corresponding to the at least one set of picture data one-to-one is acquired. Each set of metadata includes a picture frame number and the generation time stamp corresponding to a set of picture data.

A set of metadata that the preset condition is met between the generation time stamp included in the set of metadata and the photographing time stamp is searched from the at least one set of metadata.

The picture frame number included in the searched set of metadata is determined as a target frame number, and the picture data packet associated with the target frame number is searched from the at least one picture data packet.

In the above method, each of the at least one picture data packet includes a set of metadata corresponding to a set of picture data. The operation of acquiring the at least one set of metadata corresponding to the at least one set of picture data one-to-one includes the following operation.

The at least one set of metadata is obtained by parsing from the at least one picture data packet.

In the above method, before the at least one set of metadata corresponding to the at least one set of picture data one-to-one is acquired, the method further includes the following operation.

At least one metadata packet transmitted by the first processing module is received. Each of the at least one metadata packet is generated by packaging a set of metadata in the at least one set of metadata.

The operation of acquiring the at least one set of metadata corresponding to the at least one set of picture data one-to-one includes the following operation.

The at least one set of metadata is obtained by parsing from the at least one metadata packet.

In the above method, before the at least one set of metadata corresponding to the at least one set of picture data one-to-one is acquired, the method further includes the following operation.

At least one partial data packet transmitted by the first processing module is received, and the at least one partial data packet is generated by packaging partial data in each of the at least one set of metadata; and each of the at least one picture data packet includes data, which is not packaged to the partial data packet, in the set of metadata corresponding to the set of picture data included in the picture data packet.

The operation of acquiring the at least one set of metadata corresponding to the at least one set of picture data one-to-one includes the following operation.

The at least one set of metadata is obtained by parsing from the at least one partial data packet and the at least one picture data packet.

In the above method, the operation of parsing the set of picture data included in the target data packet includes the following operations.

The set of metadata corresponding to the set of picture data included in the target data packet is acquired, and parsing type information is acquired from the acquired set of metadata.

A picture parsing manner is determined according to the parsing type information, and the set of picture data included in the target data packet is parsed according to the picture parsing manner.

According to a fourth aspect, an embodiment of the disclosure provides a picture processing apparatus, which includes a first processing module and a second processing module.

The first processing module is configured to package each set of picture data in at least one set of picture data to obtain at least one picture data packet, and transmit the at least one picture data packet to the second processing module. Each set of picture data includes a plurality of frames of original pictures captured at same moment with different exposure durations.

The second processing module is configured to select a target data packet from the at least one picture data packet; and parse a set of picture data included in the target data packet, and fuse the parsed set of picture data to generate a high dynamic range picture.

According to a fifth aspect, an embodiment of the disclosure provides ax= first processing module, which includes a packaging module and a transmission module.

The packaging module is configured to package each set of picture data in at least one set of picture data to obtain at least one picture data packet. Each set of picture data is a plurality of frames of original pictures captured at same moment with different exposure durations.

The transmission module is configured to transmit the at least one picture data packet to a second processing module.

According to a sixth aspect, an embodiment of the disclosure provides a second processing module, which includes a receiving module, a selection module, and a generation module.

The receiving module is configured to receive at least one picture data packet transmitted by a first processing module.

The selection module is configured to select a target data packet from the at least one picture data packet. Each picture data packet is obtained by packaging a set of picture data, and each set of picture data includes a plurality of frames of original pictures captured at same moment with different exposure durations.

The generation module is configured to parse a set of picture data included in the target data packet, and fuse the parsed set of picture data to generate a high dynamic range picture.

According to a seventh aspect, an embodiment of the disclosure provides a computer-readable storage medium. The computer-readable storage medium stores a computer program. The picture processing method is implemented when the computer program is executed by a processor.

To make the objectives, technical solutions and advantages of the disclosure clearer, the disclosure is further described in detail below with reference to the drawings and embodiments. It is to be understood that, the specific embodiments described here are merely used to explain the disclosure, and are not used to limit the disclosure.

An embodiment of the disclosure provides a picture processing method, which is implemented by a picture processing apparatus. The picture processing apparatus may specifically be an electronic device, such as a mobile phone and a tablet computer, which is not limited in this embodiment of the disclosure.

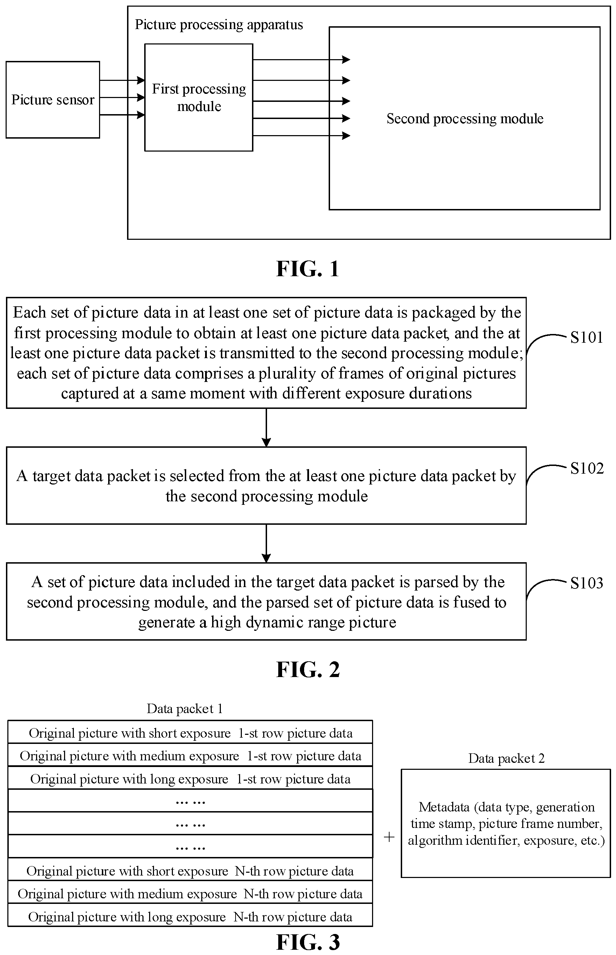

FIG. 1 is a first schematic structural diagram of a picture processing apparatus according to an embodiment of the disclosure. As shown in FIG. 1, in the embodiment of the disclosure, the picture processing apparatus includes a first processing module and a second processing module. The first processing module is connected to the second processing module. In addition, the first processing module is further connected to a picture sensor.

It is to be noted that, when the picture sensor operates in a high dynamic range mode (taking 3 DOL as an example), the picture sensor outputs three frames of pictures with different exposure durations of long exposure (L), medium exposure (M), and short exposure (S) to the first processing module at a same moment, respectively, and a picture is transmitted to the second processing module after being processed (for example, noise reduction process) by the first processing module. After the picture is received, the second processing module puts the picture into a cache queue for caching.

It is to be noted that, in the embodiment of the disclosure, the second processing module may include a processing module, such as a Central Processing Unit (CPU) and a Graphics Processing Unit (GPU), which performs processing, such as fusion and display, on the picture data.

In some embodiments, when a user triggers a photographing operation, the second processing module may be configured to select N frames of pictures from the cache queue to composite a picture to output. For example, if the current frame is the 4th frame in the queue, the previous 2 (when N=2) frames of pictures are selected for fusion, and the fused picture is processed to generate a photographed picture for display.

FIG. 2 is a first schematic flowchart of a picture processing method according to an embodiment of the disclosure. As shown in FIG. 2, in the embodiment of the disclosure, the picture processing method mainly includes the steps S101 to S103.

At S101, the first processing module packages each set of picture data in at least one set of picture data to obtain at least one picture data packet, and transmits the at least one picture data packet to a second processing module. Each set of picture data includes a plurality of frames of original pictures captured at same moment with different exposure durations.

In the embodiment of the disclosure, the picture processing apparatus may be configured to package each set of picture data in the at least one set of picture data by the first processing module to obtain the at least one picture data packet, and transmit the at least one picture data packet to the second processing module. Each set of picture data includes a plurality of frames of original pictures captured at same moment with different exposure durations.

It is to be noted that, in the embodiment of the disclosure, the first processing module may package each set of picture data as one picture data packet, and sends the picture data packet to the second processing module. In addition, the first processing module may perform a certain pre-processing such as noise reduction on the received picture data, and the embodiment of the disclosure is not limited thereto.

It is to be noted that, in the embodiment of the disclosure, the second processing module may set a data packet packaging manner for the first processing module according to an actual use requirement, so as to send the packaging configuration information for indicating the packaging manner to the first processing module. Accordingly, the first processing module may package each set of picture data according to the data packet packaging manner indicated by the packaging configuration information. The specific packaging configuration information is not limited in the embodiments of the disclosure. The packaging manner may also be preset in the first processing module, or the first processing module may determine the packaging manner by interaction with other devices.

It is to be noted that, in the embodiment of the disclosure, each set of picture data is a plurality of frames of original pictures captured at same moment with different exposure durations. In each set of picture data, the number of the plurality of frames of original pictures is not limited. There may be two frames of pictures, for example, one frame is an original picture with high-exposure, and one frame is an original picture with low-exposure. There may also be three frames of original pictures, for example, one frame is an original picture with high-exposure, one frame is an original picture with medium-exposure, and one frame is an original picture with low-exposure.

At S102, a target data packet is selected from the at least one picture data packet by the second processing module.

In the embodiment of the disclosure, the picture processing apparatus may select the target data packet from the at least one picture data packet by the second processing module after transmitting the at least one picture data packet to the second processing module by the first processing module.

Specifically, in the embodiment of the disclosure, the operation that the picture processing apparatus selects the target data packet from the at least one picture data packet by the second processing module includes: when a photographing time stamp generated based on a photographing instruction is acquired, searching, by the second processing module from the at least one picture data packet, for a picture data packet that a preset condition is met between a generation time stamp of the set of picture data included in the picture data packet and the photographing time stamp; and determining the searched picture data packet as the target data packet by the second processing module.

It is to be noted that, in the embodiment of the disclosure, when the user needs to perform photographing, the photographing instruction is sent to the picture processing apparatus, so as to generate the photographing time stamp. The photographing time stamp is actually the time of sending the photographing instruction, i.e., instructing for photographing. When the photographing time stamp is received, the second processing module searches for the picture data packet that the preset condition is met between the generation time stamp of the set of picture data included in the picture data packet and the photographing time stamp as the target data packet for subsequent picture generation.

It is to be noted that, in the embodiment of the disclosure, the second processing module may specifically determine the picture data packet that the generation time stamp of the set of picture data included in the picture data packet in the at least one picture data packet is closest to the photographing time stamp as the picture data packet that the time stamp meets the preset condition, i.e., the target data packet, so as to guarantee a subsequent imaging effect. Other preset conditions may also be set according to actual requirements and application scenarios, which is not limited in the embodiments of the disclosure.

It is to be understood that, for an existing picture data selection manner that the picture data is selected according to a fixed position in the queue, in a case that certain delay is generated when the first processing module processes the picture data, the picture data desired by the user cannot be accurately selected for high dynamic range picture composition. In the embodiment of the disclosure, the second processing module searches for the picture data packet that the generation time stamp of the set of picture data included in the picture data packet is closest to the photographing time stamp as the target data packet. Thus, the matching is performed strictly based on an actual photographing time stamp, such that the accuracy of picture data selection may be guaranteed, thereby guaranteeing an imaging effect.

Specifically, in the embodiment of the disclosure, the operation that the picture processing apparatus searches for the picture data packet that the preset condition is met between the generation time stamp of the set of picture data included in the picture data packet and the photographing time stamp by the second processing module includes: acquiring, by the second processing module, at least one set of metadata corresponding to the at least one set of picture data one-to-one, where each set of metadata includes a picture frame number and the generation time stamp corresponding to a set of picture data; searching, by the second processing module from the at least one set of metadata, for a set of metadata that the preset condition is met between the generation time stamp included in the set of metadata and the photographing time stamp; and determining, by the second processing module, the picture frame number included in the searched set of metadata as a target frame number, and searching for the picture data packet associated with the target frame number from the at least one picture data packet.

It is to be noted that, in the embodiment of the disclosure, the set of metadata corresponding to each set of picture data describes mainly the information of the attributes of the plurality of frames of original pictures in the set of picture data, for example, a storage position, the corresponding generation time stamp, the picture frame number, and the like, which is not limited in the embodiments of the disclosure.

In the embodiment of the disclosure, the first processing module may acquire at least one set of metadata corresponding to the at least one set of picture data in advance, then transmit the at least one set of metadata to the second processing module, and provide the at least one set of metadata to the second processing module. The first processing module may transmit the at least one set of metadata by using different manner. Details are described below.

Specifically, in the embodiment of the disclosure, before the at least one set of metadata corresponding to the at least one set of picture data one-to-one is acquired by the second processing module, the picture processing apparatus may further execute the following step:, packaging, in each of the at least one picture data packet, the set of metadata corresponding to the set of picture data included in the respective picture data packet by the first processing module. Accordingly, the step of acquiring the at least one set of metadata corresponding to the at least one set of picture data one-to-one by the second processing module includes: parsing from the at least one picture data packet to obtain the at least one set of metadata by the second processing module.

It is to be understood that, in the embodiment of the disclosure, when the first processing module packages each set of picture data, the first processing module may package each set of picture data and the corresponding set of metadata together, that is, the picture data packet includes not only a set of picture data, but also a set of metadata corresponding to the set of picture data. In this way, the second processing module may directly acquire the at least one set of metadata from the at least one picture data packet.

Specifically, in the embodiment of the disclosure, before acquiring the at least one set of metadata corresponding to the at least one set of picture data one-to-one by the second processing module, the picture processing apparatus may further execute the following step: packaging each set of metadata in the at least one set of metadata by the first processing module to obtain at least one metadata packet, and transmitting the at least one metadata packet to the second processing module. Accordingly, the step of acquiring the at least one set of metadata corresponding to the at least one set of picture data one-to-one by the second processing module includes: parsing from the at least one metadata packet to obtain the at least one set of metadata.

It is to be understood that, in the embodiment of the disclosure, the first processing module may package each set of picture data and the corresponding set of metadata as one metadata packet. In this case, the first processing module actually needs to occupy two data transmission channels to transmit data to the second processing module. One channel transmits the at least one picture data packet, and the other channel transmits the at least one metadata packet. Therefore, the second processing module may directly acquire the at least one set of metadata from the at least one metadata packet.

Specifically, in the embodiment of the disclosure, before acquiring the at least one set of metadata corresponding to the at least one set of picture data one-to-one by the second processing module, the picture processing apparatus may further execute the following steps: packaging partial data in each set of metadata in the at least one set of metadata by the first processing module to obtain at least one partial data packet, and in each of the at least one picture data packet, packaging data, which is not packaged to the partial data packet, in the set of metadata corresponding to the set of picture data included in the respective picture data packet; and transmitting the at least one partial data packet to the second processing module by the first processing module. Accordingly, the step of acquiring the at least one set of metadata corresponding to the at least one set of picture data one-to-one by the second processing module includes: parsing from the at least one partial data packet and the at least one picture data packet to obtain the at least one set of metadata by the second processing module.

It is to be understood that, in the embodiment of the disclosure, the first processing module may split each set of picture data and the corresponding set of metadata. Part of the data is packaged into the picture data packet, and part of the data is separately packaged. In this case, the first processing module actually needs to occupy two data transmission channels to transmit data to the second processing module. One channel transmits the at least one picture data packet, and the other channel transmits the at least one partial data packet. Therefore, it is required for the second processing module to acquire the at least one set of metadata from the at least one picture data packet and the at least one partial data packet.

FIG. 3 is a first schematic diagram of exemplary packaging according to an embodiment of the disclosure. As shown in FIG. 3, a set of picture data includes: an original picture with long exposure, an original picture with medium exposure and an original picture with short exposure at same moment. The first processing module may package the three frames of original pictures into one data packet. In addition, the set of metadata corresponding to the three frames of original pictures is packaged into one data packet.

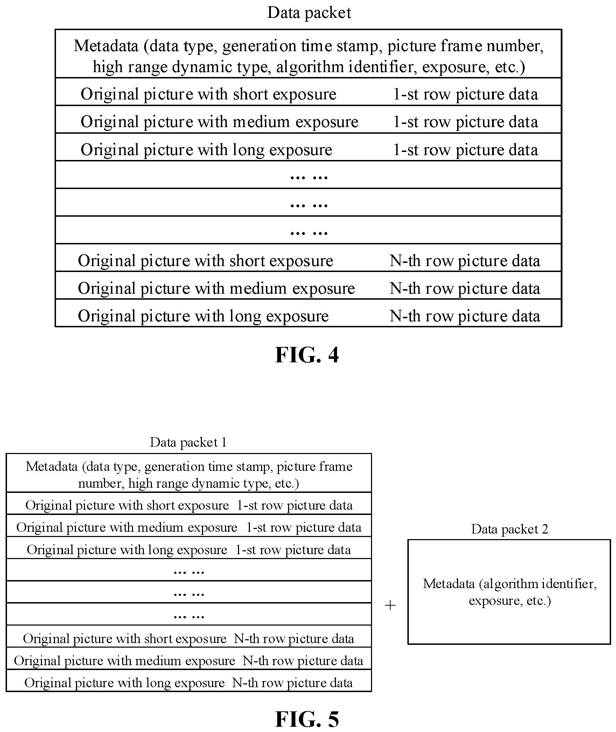

FIG. 4 is a second schematic diagram of exemplary packaging according to an embodiment of the disclosure. As shown in FIG. 4, a set of picture data includes: an original picture with long exposure, an original picture with medium exposure and an original picture with short exposure at same moment. The first processing module may package the three frames of original pictures and a corresponding set of metadata into one data packet.

FIG. 5 is a third exemplary schematic packaging diagram of exemplary packaging according to an embodiment of the disclosure. As shown in FIG. 5, a set of picture data includes: an original picture with long exposure, an original picture with medium exposure and an original picture with short exposure at same moment. The first processing module may package the three frames of original pictures and partial data in a corresponding set of metadata into one data packet, and package the remaining data in the corresponding set of metadata into one data packet.

It is to be noted that, in the embodiment of the disclosure, for the case that the set of picture data and partial data in the corresponding set of metadata are packaged together, and the remaining metadata is separately packaged, the first processing module may perform the selection of partial data, which is packaged with the plurality of frames of original pictures, in the set of metadata according to actual situations. Of course, the second processing module may instruct the specifically type of the data, which is packaged with the plurality of frames of original pictures, in the set of metadata to the first processing module, such that the first processing module may perform data selection according to the instructed type of data, and the embodiment of the disclosure is not limited thereto.

It is to be noted that, in the embodiment of the disclosure, in the picture processing apparatus, the first processing module sends the picture data packet obtained by packaging each set of picture data to the second processing module, and the second processing module may store the picture data packets in the form of a queue, such that the picture data packet obtained by packaging each set of picture data may be stored in a picture cache queue.

It is to be understood that, in the embodiment of the disclosure, as described in the above steps, the first processing module may package each set of picture data and the corresponding set of metadata together, or in a separate and independent manner, or in a partially combined manner. Accordingly, the data packet received by the second processing module may be the picture data packet, or two data packets, that is, the data packet including the metadata or part of metadata may also be received. For the case of the two data packets, during storage, the second processing module may store the two data packets into different queues, that is, the picture data packet is stored into the picture cache queue, and the data packet including all metadata or part of metadata is stored into a metadata cache queue.

At S103, the second processing module parses a set of picture data included in the target data packet, and fuses the parsed set of picture data to generate a high dynamic range picture.

In the embodiment of the disclosure, in the picture processing apparatus, when the target data packet is determined, the second processing module may parse the set of picture data included in the target data packet, and fuse the set of picture data parsed to generate the high dynamic range picture.

It is to be understood that, in the embodiment of the disclosure, the first processing module actually sequentially receive each set of picture data. Accordingly, that is to say, a new picture data packet obtained by packaging each set of picture data is sequentially sent to the second processing module.

It is to be noted that, in the embodiment of the disclosure, as described in S102, in the picture processing apparatus, when the target data packet is determined, the second processing module may acquire a set of metadata corresponding to each set of picture data. Each set of metadata includes parsing type information of the corresponding set of picture data, and the parsing type information may be used for parsing the corresponding set of picture data.

Specifically, in the embodiment of the disclosure, the picture processing apparatus parses the set of picture data included in the target data packet by the second processing module includes: acquiring, by the second processing module, the set of metadata corresponding to the set of picture data included in the target data packet, and acquiring the parsing type information from the acquired set of metadata; and determining a picture parsing manner according to the parsing type information by the second processing module, and parsing, by the second processing module, the set of picture data included in the target data packet according to the picture parsing manner.

It is to be understood that, in the embodiment of the disclosure, in case that the second processing module determines the target data packet, the second processing module may parse the picture data to obtain the set of picture data used for generating the high dynamic range picture. The second processing module may acquire the parsing type information from the set of metadata corresponding to the set of picture data included in the target data packet and then determine, according to the parsing type information, the picture parsing manner that supports the parsing of the set of picture data in the target data packet, i.e., the plurality of frames of original pictures captured at same moment with different exposure durations. In this way, the set of picture data in the target data packet may be subsequently parsed, and the composition may be performed after the set of picture data is obtained, thereby obtaining the high dynamic range picture.

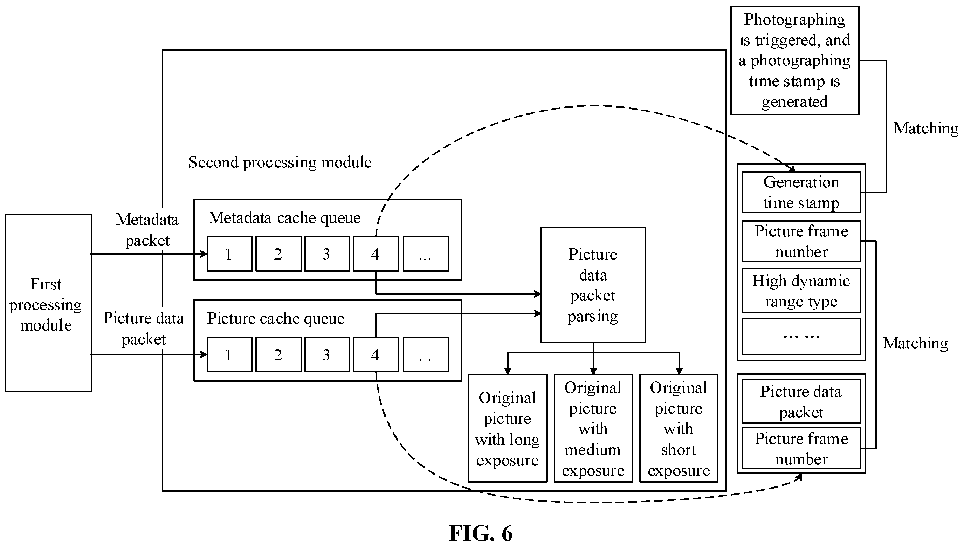

FIG. 6 is a schematic diagram of an exemplary processing for the picture data packet according to an embodiment of the disclosure. As shown in FIG. 6, a set of picture data actually includes: an original picture with long exposure, an original picture with medium exposure and an original picture with short exposure at same moment. The first processing module transmits the picture data packet obtained by packaging the set of picture data, and the metadata packet obtained by packaging the set of metadata corresponding to the set of picture data to the second processing module. Each picture data packet is associated with picture frame numbers of the included three frames of original pictures. The metadata in each metadata packet includes not only the picture frame number and the generation time stamp corresponding to the set of picture data, but also other data related to the corresponding set of picture data. The two types of data packets are stored into the corresponding queues, respectively. When the photographing is triggered, the second processing module may obtain the picture frame number of the corresponding set of picture data by searching for the metadata packet that the generation time stamp in the metadata included in the metadata is closest to the photographing time stamp, and further search the picture data packet including the corresponding set of picture data to continue to perform subsequent picture parsing and composition.

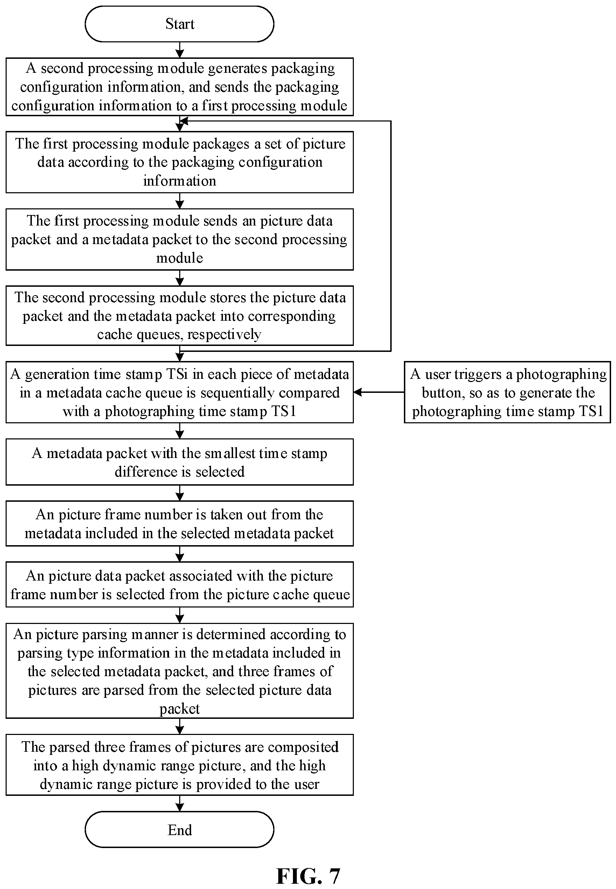

FIG. 7 is a flowchart schematic of exemplary data packet transmission and parsing according to an embodiment of the disclosure. As shown in FIG. 7, the second processing module generates packaging configuration information according to use requirements. Specifically, that is, a set of picture data with 3 frames with different exposure durations is packaged together, the corresponding set of metadata is separately packaged, and then the packaging configuration information is transmitted to the first processing module. The first processing module packages the received three frames of original pictures at same moment and the corresponding set of metadata according to the packaging configuration information sent by the second processing module, and transmits the same to the second processing module. The second processing module receives the picture data packet, puts the picture data packet into the picture cache queue, receives the metadata packet, and puts the metadata packet into the metadata cache queue. When a user triggers a photographing button, a photographing time stamp TS1 is generated. At this case, the second processing module starts to sequentially compare a generation time stamp TSi in each piece of metadata in the metadata cache queue with the photographing time stamp TS1 to calculate a time difference between the generation time stamp TSi and the photographing time stamp TS1, selects the metadata packet with the smallest time difference, further takes a picture frame number from the metadata included in the selected metadata packet, and selects a picture data packet associated with the picture frame number from the picture cache queue. In this case, the picture data packet and the corresponding metadata packet have been selected. The second processing module determines the picture parsing manner according to parsing type information in the selected metadata packet, thereby parsing the selected picture data packet to obtain three frames of original pictures, and finally composites the obtained three frames of original pictures to provide to the user.

An embodiment of the disclosure provides a picture processing method, which is applied to a picture processing apparatus. The picture processing apparatus includes a first processing module and a second processing module. The method includes: packaging each set of picture data in at least one set of picture data by a first processing module to obtain at least one picture data packet, and transmitting the at least one picture data packet to a second processing module, where each set of picture data includes a plurality of frames of original pictures captured at same moment with different exposure durations; selecting a target data packet from the at least one picture data packet by the second processing module; and parsing, by the second processing module, a set of picture data included in the target data packet, and fusing the parsed set of picture data to generate a high dynamic range picture. In the picture processing method provided by the embodiments of the disclosure, the first processing module may package the plurality of frames of original pictures captured at same moment with different exposure durations, and then transmit the same to the second processing module. Therefore, the transmission channels occupied by picture transmission are reduced, and the efficiency of picture transmission is improved.

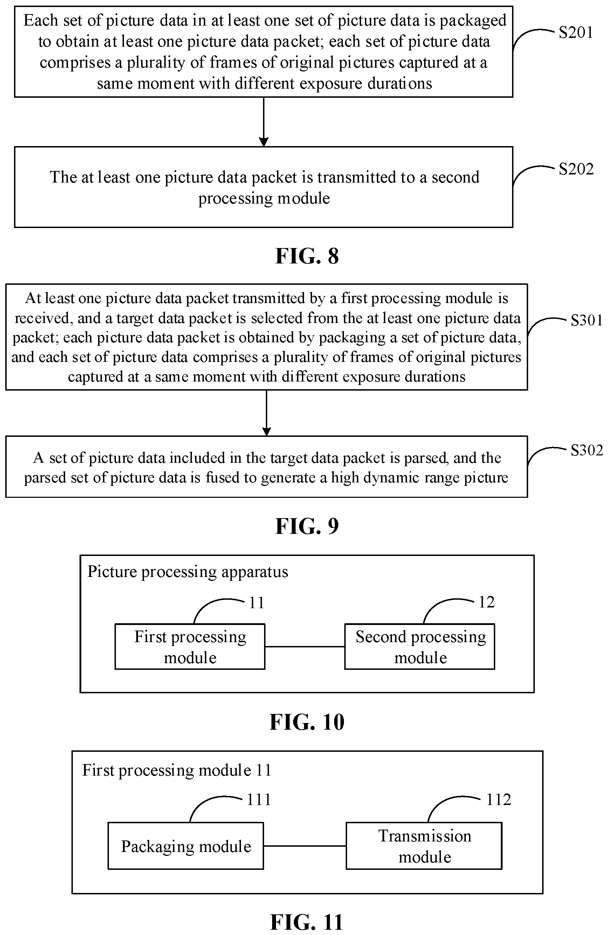

An embodiment of the disclosure provides a picture processing method, which is applied to the first processing module 11. FIG. 8 is a second schematic flowchart of a picture processing method according to an embodiment of the disclosure. As shown in FIG. 8, the method mainly includes the steps S201 and S202.

At S201, each set of picture data in at least one set of picture data is packaged to obtain at least one picture data packet. Each set of picture data includes a plurality of frames of original pictures captured at same moment with different exposure durations.

At S202, the at least one picture data packet is transmitted to a second processing module.

It is to be noted that, in the embodiment of the disclosure, the first processing module may further execute the following steps. In each of the at least one picture data packet, a set of metadata corresponding to a set of picture data included in the respective picture data packet is packaged.

Alternatively, the set of metadata corresponding to each set of picture data in the at least one set of picture data is packaged to obtain at least one metadata packet, and the at least one metadata packet is transmitted to the second processing module.

Alternatively, partial data in the set of metadata corresponding to each set of picture data in the at least one set of picture data is packaged to obtain at least one partial data packet, and in each of the at least one picture data packet, the data, which is not packaged to the partial data packet, in the set of metadata corresponding to the set of picture data included in the respective picture data packet is packaged.

It is to be noted that, in the embodiments of the disclosure, a picture processing manner specifically executed by the first processing module refers to relevant content of the first processing module in S101-S103, and is not elaborated herein.

An embodiment of the disclosure provides a picture processing method, which is applied to the second processing module. FIG. 9 is a third schematic flowchart of a picture processing method according to an embodiment of the disclosure. As shown in FIG. 9, the method mainly includes the steps S301 to S302.

At S301, at least one picture data packet transmitted by a first processing module is received, and a target data packet is selected from the at least one picture data packet. Each picture data packet is obtained by packaging a set of picture data, and each set of picture data includes a plurality of frames of original pictures captured at same moment with different exposure durations.

At S302, a set of picture data included in the target data packet is parsed, and the parsed set of picture data is fused to generate a high dynamic range picture.

Specifically, in the embodiments of the disclosure, the operation that the second processing module selects the target data packet from the at least one picture data packet includes: when a photographing time stamp generated based on a photographing instruction is acquired, searching, from the at least one picture data packet, for a picture data packet that a preset condition is met between a generation time stamp of the set of picture data included in the respective picture data packet and the photographing time stamp; and determining the searched picture data packet as the target data packet.

Specifically, in the embodiments of the disclosure, the operation that the second processing module searches for the picture data packet that the preset condition is met between the generation time stamp of the set of picture data included in the picture data packet and the photographing time stamp includes: acquiring at least one set of metadata corresponding to the at least one set of picture data, where each set of metadata includes a picture frame number and the generation time stamp corresponding to a set of picture data; searching, from the at least one set of metadata, for a set of metadata that the preset condition is met between the generation time stamp included in the picture data packet and the photographing time stamp; and determining the picture frame number included in the searched set of metadata searched as a target frame number, and, searching for the picture data packet associated with the target frame number from the at least one picture data packet.

Specifically, in the embodiments of the disclosure, the operation that the second processing module parses the set of picture data included in the target data packet includes: acquiring the set of metadata corresponding to the set of picture data included in the target data packet, and acquiring the parsing type information from the acquired set of metadata; and determining a picture parsing manner according to the parsing type information, and parsing the set of picture data included in the target data packet according to the picture parsing manner.

It is to be noted that, in the embodiments of the disclosure, a picture processing method specifically executed by the second processing module refers to relevant content of the second processing module in S101-S103, and is not elaborated herein.

An embodiment of the disclosure provides a picture processing apparatus. FIG. 10 is a second schematic structural diagram of a picture processing apparatus according to an embodiment of the disclosure. As shown in FIG. 10, the picture processing apparatus includes a first processing module 11 and a second processing module 12.

The first processing module 11 is configured to package each set of picture data in at least one set of picture data by a first processing module to obtain at least one picture data packet, and transmit the at least one picture data packet to a second processing module 12. Each set of picture data includes a plurality of frames of original pictures captured at same moment with different exposure durations.

The second processing module 12 is configured to select a target data packet from the at least one picture data packet; and parse a set of picture data included in the target data packet, and fuse the parsed set of picture data to generate a high dynamic range picture.

In an embodiment of the disclosure, the second processing module 12 is specifically configured to perform the following operations.

When a photographing time stamp generated based on a photographing instruction is acquired, a picture data packet that a preset condition is met between a generation time stamp of the set of picture data included in the picture data packet and the photographing time stamp is searched from the at least one picture data packet.

The searched picture data packet is determined as the target data packet.

In an embodiment of the disclosure, the second processing module 12 is specifically configured to perform the following operations.

At least one set of metadata corresponding to the at least one set of picture data is acquired. Each set of metadata includes a picture frame number and the generation time stamp, which correspond to a set of picture data.

A set of metadata that the preset condition is met between the generation time stamp included in the respective metadata and the photographing time stamp is searched from the at least one set of metadata.

The picture frame number included in the searched set of metadata is determined as a target frame number, and the picture data packet associated with the target frame number is searched from the at least one picture data packet.

In an embodiment of the disclosure, the first processing module 11 is further configured to perform the following operation.

In each of the at least one picture data packet, a set of metadata corresponding to a set of picture data included in the respective picture data packet is packaged.

The second processing module 12 is specifically configured to parse from the at least one picture data packet to obtain the at least one set of metadata.

In an embodiment of the disclosure, the first processing module 11 is further configured to perform the following operation.

Each set of metadata in the at least one set of metadata is packaged to obtain at least one metadata packet, and the at least one metadata packet is transmitted to the second processing module 12.

The second processing module 12 is specifically configured to parse from the at least one metadata packet to obtain the at least one set of metadata.

In an embodiment of the disclosure, the first processing module 11 is further configured to perform the following operations.

Partial data in each set of metadata in the at least one set of metadata is packaged to obtain at least one partial data packet, and in each of the at least one picture data packet, data, which is not packaged to the partial data packet, in the set of metadata corresponding to the set of picture data included the respective picture data packet is packaged.

The at least one partial data packet is transmitted to the second processing module 12.

The second processing module 12 is specifically configured to parse from the at least one partial data packet and the at least one picture data packet to obtain the at least one set of metadata.

In an embodiment of the disclosure, the second processing module 12 is specifically configured to perform the following operations.

The set of metadata corresponding to the set of picture data included in the target data packet is acquired, and parsing type information is acquired from the acquired set of metadata.

A picture parsing manner is determined according to the parsing type information, and the set of picture data included in the target data packet is parsed according to the picture parsing manner.

An embodiment of the disclosure provides a first processing module. FIG. 11 is a schematic structural diagram of a first processing module according to an embodiment of the disclosure. As shown in FIG. 11, the first processing module 11 includes a packaging module 111 and a transmission module 112.

The packaging module 111 is configured to package each set of picture data in at least one set of picture data to obtain at least one picture data packet. Each set of picture data includes a plurality of frames of original pictures captured at same moment with different exposure durations.

The transmission module 112 is configured to transmit the at least one picture data packet to a second processing module 12.

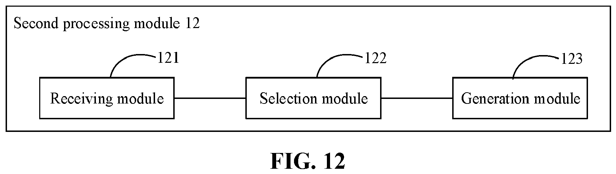

An embodiment of the disclosure provides a second processing module. FIG. 12 is a schematic structural diagram of a second processing module according to an embodiment of the disclosure. As shown in FIG. 12, the second processing module 12 includes a receiving module 121, a selection module 122, and a generation module 123.

The receiving module 121 is configured to receive at least one picture data packet transmitted by a first processing module 11.

The selection module 122 is configured to select a target data packet from the at least one picture data packet. Each picture data packet is obtained by packaging a set of picture data, and each set of picture data includes a plurality of frames of original pictures captured at same moment with different exposure durations.

The generation module 123 is configured to parse a set of picture data included in the target data packet, and fuse the parsed set of picture data to generate a high dynamic range picture.

An embodiment of the disclosure provides a computer-readable storage medium. The computer-readable storage medium stores a computer program. The above-mentioned method for picture processing is implemented when the computer program is executed by a processor. The computer-readable storage medium may be a volatile memory such as a Random-Access Memory (RAM), or a non-volatile memory such as a Read-Only Memory (ROM), a flash memory, a Hard Disk Drive (HDD) or a Solid-State Drive (SSD), or may also be a respective device including one or any combination of the above memories, such as a mobile phone, a computer, a tablet device, a personal digital assistant, and the like.

Persons skilled in the art should understand that the embodiments of the disclosure may be provided as a method, a system, or a computer program product. Therefore, the disclosure may adopt forms of hardware embodiments, software embodiments or embodiments integrating software and hardware. Moreover, the disclosure may adopt the form of a computer program product implemented on one or more computer available storage medium (including but being not limited to a disk memory, an optical memory, and the like) containing computer available program codes.

The disclosure is described with reference to flowchart schematic diagrams and/or block diagrams of the implementations for the method, the device (system) and the computer program product according to the embodiments of the disclosure. It is to be understood that, each flow and/or block in the schematic diagram and/or block diagram, and the combination of the flow and/or block in the schematic diagram and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the functions specified in the implementing of one or more flows of the schematic diagram and/or one or more blocks of the block diagram.

These computer program instructions may also be stored in the computer-readable memory which can guide the computer or other programmable data processing devices to operate in a particular way, so that the instructions stored in the computer-readable memory generate a product including an instruction device. The instruction device implements the functions specified in the implementation for one or more flows of the schematic diagram and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the functions specified in the implementation for one or more flows of the schematic diagram and/or one or more blocks of the block diagram.

The above is only the specific implementations of the disclosure and not intended to limit the scope of protection of the disclosure. Any variations or replacements apparent to those skilled in the art within the technical scope disclosed by the disclosure shall fall within the scope of protection of the disclosure. Therefore, the protection scope of the disclosure shall be subject to the protection scope of the claims.

### INDUSTRIAL APPLICABILITY

The embodiments of the disclosure provide a picture processing method and apparatus, and a storage medium. The picture processing apparatus includes a first processing module and a second processing module. The method includes: packaging each set of picture data in at least one set of picture data by a first processing module to obtain at least one picture data packet, and transmitting the at least one picture data packet to a second processing module, where each set of picture information includes a plurality of frames of original pictures captured at same moment with different exposure durations; selecting a target data packet from the at least one picture data packet by the second processing module; and parsing, by the second processing module, a set of picture data included in the target data packet, and fusing the set of picture data parsed to generate a high dynamic range picture. In the technical solutions provided by the embodiments of the disclosure, the first processing module may package the plurality of frames of original pictures captured at same moment with different exposure durations, and then transmit the packet to the second processing module. Therefore, transmission channels occupied by picture transmission are reduced, and the efficiency of picture transmission is improved.

## Claims

1. A method for picture processing, applied to a picture processing apparatus, wherein the picture processing apparatus comprises a first processing module and a second processing module; and the method comprises:
packaging, by the first processing module, each set of picture data in at least one set of picture data to obtain at least one picture data packet, and transmitting, by the first processing module, the at least one picture data packet to the second processing module, wherein each set of picture data comprises a plurality of frames of original pictures captured at a same moment with different exposure durations;
selecting, by the second processing module, a target data packet from the at least one picture data packet; and
parsing, by the second processing module, a set of picture data comprised in the target data packet, and fusing, by the second processing module, the parsed set of picture data to generate a high dynamic range picture.

2. The method of claim 1, wherein selecting, by the second processing module, the target data packet from the at least one picture data packet comprises:
when a photographing time stamp generated based on a photographing instruction is acquired, searching, by the second processing module from the at least one picture data packet, for a picture data packet that a preset condition is met between a generation time stamp of a set of picture data comprised in the picture data packet and the photographing time stamp; and
determining, by the second processing module, the searched picture data packet as the target data packet.

3. The method of claim 2, wherein searching, by the second processing module, for the picture data packet that the preset condition is met between the generation time stamp of the set of picture data comprised in the picture data packet and the photographing time stamp comprises:
acquiring, by the second processing module, at least one set of metadata corresponding to the at least one set of picture data one-to-one, wherein each set of metadata comprises a picture frame number and a generation time stamp corresponding to a set of picture data;
searching, by the second processing module from the at least one set of metadata, for a set of metadata that the preset condition is met between a generation time stamp comprised in the set of metadata and the photographing time stamp; and
determining, by the second processing module, a picture frame number comprised in the searched set of metadata as a target frame number, and searching, by the second processing module, for a picture data packet associated with the target frame number from the at least one picture data packet.

4. The method of claim 3, wherein before acquiring, by the second processing module, the at least one set of metadata corresponding to the at least one set of picture data one-to-one, the method further comprises:
packaging, by the first processing module in each of the at least one picture data packet, a set of metadata corresponding to a set of picture data comprised in the respective picture data packet; and
acquiring, by the second processing module, the at least one set of metadata corresponding to the at least one set of picture data one-to-one comprises:
parsing, by the second processing module, from the at least one picture data packet to obtain the at least one set of metadata .

5. The method of claim 3, wherein before acquiring, by the second processing module, the at least one set of metadata corresponding to the at least one set of picture data one-to-one, the method further comprises:
packaging, by the first processing module, each set of metadata in the at least one set of metadata to obtain at least one metadata packet, and transmitting, by the first processing module, the at least one metadata packet to the second processing module; and
acquiring, by the second processing module, the at least one set of metadata corresponding to the at least one set of picture data one-to-one comprises:
parsing from the at least one metadata packet to obtain the at least one set of metadata.

6. The method of claim 3, wherein before acquiring, by the second processing module, the at least one set of metadata corresponding to the at least one set of picture data one-to-one, the method further comprises:
packaging, by the first processing module, partial data in each set of metadata in the at least one set of metadata to obtain at least one partial data packet, and packaging, by the first processing module in each of the at least one picture data packet, data, which is not packaged to a partial data packet, in the set of metadata corresponding to a set of picture data comprised in the respective picture data packet; and
transmitting, by the first processing module, the at least one partial data packet to the second processing module; and
acquiring, by the second processing module, the at least one set of metadata corresponding to the at least one set of picture data one-to-one comprises:
parsing, by the second processing module, from the at least one partial data packet and the at least one picture data packet to obtain the at least one set of metadata .

7. The method of claim 3, wherein parsing, by the second processing module, the set of picture data comprised in the target data packet comprises:
acquiring, by the second processing module, a set of metadata corresponding to a set of picture data comprised in the target data packet, and acquiring, by the second processing module, parsing type information from the acquired set of metadata; and
determining, by the second processing module, a picture parsing manner according to the parsing type information, and parsing, by the second processing module, a set of picture data comprised in the target data packet according to the picture parsing manner.

8. A method for picture processing, applied to a first processing module, wherein the method comprises:
packaging each set of picture data in at least one set of picture data to obtain at least one picture data packet, wherein each set of picture data comprises a plurality of frames of original pictures captured at a same moment with different exposure durations; and
transmitting the at least one picture data packet to a second processing module.

9. The method of claim 8, further comprising:
packaging, in each of the at least one picture data packet, a set of metadata corresponding to a set of picture data comprised in the respective picture data packet; or
packaging a set of metadata corresponding to each set of picture data in the at least one set of picture data to obtain at least one metadata packet, and transmitting the at least one metadata packet to the second processing module; or
packaging partial data in a set of metadata corresponding to each set of picture data in the at least one set of picture data to obtain at least one partial data packet, and packaging, in each of the at least one picture data packet, data, which is not packaged to a partial data packet, in a set of metadata corresponding to a set of picture data comprised in the respective picture data packet.

10. A method for picture processing, applied to a second processing module, wherein the method comprises:
receiving at least one picture data packet transmitted by a first processing module, and selecting a target data packet from the at least one picture data packet, wherein each picture data packet is obtained by packaging a set of picture data, and each set of picture data comprises a plurality of frames of original pictures captured at a same moment with different exposure durations; and
parsing a set of picture data comprised in the target data packet, and fusing the parsed set of picture data to generate a high dynamic range picture.

11. The method of claim 10, wherein selecting the target data packet from the at least one picture data packet comprises:
when a photographing time stamp generated based on a photographing instruction is acquired, searching, from the at least one picture data packet, for a picture data packet that a preset condition is met between a generation time stamp of a set of picture data comprised in the picture data packet and the photographing time stamp; and
determining the searched picture data packet as the target data packet.

12. The method of claim 11, wherein searching for the picture data packet that the preset condition is met between the generation time stamp of the set of picture data comprised in the picture data packet and the photographing time stamp comprises:
acquiring at least one set of metadata corresponding to the at least one set of picture data one-to-one, wherein each set of metadata comprises a picture frame number and a generation time stamp corresponding to a set of picture data;
searching, from the at least one set of metadata, for a set of metadata that the preset condition is met between a generation time stamp comprised in the set of metadata and the photographing time stamp; and
determining a picture frame number comprised in the searched set of metadata as a target frame number, and searching for a picture data packet associated with the target frame number from the at least one picture data packet.

13. The method of claim 12, wherein each of the at least one picture data packet comprises a set of metadata corresponding to a set of picture data; and acquiring the at least one set of metadata corresponding to the at least one set of picture data one-to-one comprises:
parsing from the at least one picture data packet to obtain the at least one set of metadata.

14. The method of claim 12, wherein before acquiring the at least one set of metadata corresponding to the at least one set of picture data one-to-one, the method further comprises:
receiving at least one metadata packet transmitted by the first processing module, wherein each of the at least one metadata packet is generated by packaging a respective set of metadata in the at least one set of metadata; and
acquiring the at least one set of metadata corresponding to the at least one set of picture data one-to-one comprises:
parsing from the at least one metadata packet to obtain the at least one set of metadata.

15. The method of claim 12, wherein before acquiring the at least one set of metadata corresponding to the at least one set of picture data one-to-one, the method further comprises:
receiving at least one partial data packet transmitted by the first processing module, wherein the at least one partial data packet is generated by packaging partial data in each of the at least one set of metadata; and each of the at least one picture data packet comprises data, which is not packaged to the partial data packet, in the set of metadata corresponding to a set of picture data comprised in the respective picture data packet; and
acquiring the at least one set of metadata corresponding to the at least one set of picture data one-to-one comprises:
parsing from the at least one partial data packet and the at least one picture data packet to obtain the at least one set of metadata.

16. The method of claim 10, wherein parsing the set of picture data comprised in the target data packet comprises:
acquiring a set of metadata corresponding to the set of picture data comprised in the target data packet, and acquiring parsing type information from the acquired set of metadata; and
determining a picture parsing manner according to the parsing type information, and parsing the set of picture data comprised in the target data packet according to the picture parsing manner.

17. A picture processing apparatus, comprising a first processing module and a second processing module, wherein
the first processing module is configured to package each set of picture data in at least one set of picture data to obtain at least one picture data packet, and transmit the at least one picture data packet to the second processing module, wherein each set of picture data comprises a plurality of frames of original pictures captured at a same moment with different exposure durations; and
the second processing module is configured to select a target data packet from the at least one picture data packet; and parse a set of picture data comprised in the target data packet, and fuse the parsed set of picture data to generate a high dynamic range picture.

18. A first processing module, comprising:
a packaging module, configured to package each set of picture data in at least one set of picture data to obtain at least one picture data packet, wherein each set of picture data comprises a plurality of frames of original pictures captured at a same moment with different exposure durations; and
a transmission module, configured to transmit the at least one picture data packet to a second processing module.

19. A second processing module, comprising:
a receiving module, configured to receive at least one picture data packet transmitted by a first processing module;
a selection module, configured to select a target data packet from the at least one picture data packet, wherein each picture data packet is obtained by packaging a set of picture data, and each set of picture data comprises a plurality of frames of original pictures captured at a same moment with different exposure durations; and
a generation module, configured to parse a set of picture data comprised in the target data packet, and fuse the set of picture data parsed to generate a high dynamic range picture.

20. A computer-readable storage medium, having stored thereon a computer program which, when executed by a processor, implements the method for picture processing of any one of claims 1 to 16.
